# EUROPÄISCHE PATENTSCHRIFT

(11) **EP 0 650 398 B1**
(45) Veröffentlichungstag und Bekanntmachung des Hinweises auf die Patenterteilung: **24.07.1996**
(21) Anmeldenummer: 93905080.3
(22) Anmeldetag: 16.03.1993
(51) Int. Cl.: B05B 15/04, B05B 15/12

(54) **VORRICHTUNG ZUR SPRITZBEHANDLUNG**
SPRAYING DEVICE
DISPOSITIF DE PULVERISATION

(30) Priorität: 15.07.1992 AT 1443/92
(43) Veröffentlichungstag der Anmeldung: 03.05.1995
(73) Patentinhaber: EDER, Michael, A-9900 Lienz (AT)
(72) Erfinder: EDER, Michael, A-9900 Lienz (AT); WALDNER, Franz, A-9990 Lienz (AT)
(74) Vertreter: Torggler, Paul, Dr.
(86) Internationale Anmeldenummer: AT9300048
(87) Internationale Veröffentlichungsnummer: WO9402254

(56) Entgegenhaltungen:
- EP-A- 0 260 539
- DD-A- 236 023
- FR-A- 2 115 590
- PATENT ABSTRACTS OF JAPAN vol. 015, no. 145 (C-0823)12. April 1991 & JP,A,30 26 370 (NORDSON KK) 4 February 1991

## Beschreibung

Die Erfindung betrifft eine Vorrichtung zur Spritzbehandlung, insbesondere zur Spritzlackierung von Gegenständen mit einer Fördereinrichtung bzw. Auflage für die Gegenstände und mit einer Auffangvorrichtung zum Auffangen des an den Gegenständen und der Fördereinrichtung bzw. Auflage vorbeitretenden Spritzmediums.

Beim Auftragen von Spritzmedien (beispielsweise Aufspritzen von flüssigem Lack oder Pulver) auf Gegenstände (Werkstücke) besteht das Problem, das nicht auf den Gegenstand gelangende Spritzmedium zu entfernen und anschließend umweltgerecht zu entsorgen.

Es ist bereits bekannt, das überschüssige Spritzmedium (Overspray) in mit Koagulierungsmittel durchsetztem Wasser aufzufangen und dann daraus einen Schlamm zu extrahieren. Der entstehende Schlamm ist allerdings "Sondermüll". Die Entsorgung ist dementsprechend problematisch und kostspielig. Auch läßt sich die aufzufangende Wasseroberfläche nicht in beliebigen räumlichen Lagen anordnen und es ist ein hoher und maschinell technischer Aufwand nötig, um diese Technologie zu verwirklichen.

Weiters ist es bekannt, den sich auf Transportbändern für die Gegenstände durch eine automatische Spritzmaschine niedersetzenden Spritzmediumsüberschuss mechanisch durch Abkratzen bzw. Abschaben zu entfernen. Diese Systeme dienen hauptsächlich zur Reinigung der Transportbänder. Ein gezieltes Auffangen des überschüssigen Spritzmediums sowie eine Wiederverwendung desselben ist dabei nicht vorgesehen. Außerdem müssen die Transportbänder nach der Abnahme getrocknet werden bevor sie erneut mit den Gegenständen in Berührung kommen. Die Transportgeschwindigkeit des Spritzmediumüberschusses ist an eine niedrige Transportgeschwindigkeit der Gegenstände in der Spritzmaschine gebunden, womit zwischen dem Aufspritzen des Spritzmediums und der Abnahme des Überschusses von den Transportbändern eine beträchtliche Zeit vergeht. Dies führt auf Grund der erhöhten Verdunstung von Lösungsmitteln nicht nur zu einer größeren Umweltbelastung, sondern auch zu einer erschwerten Abnahme des Spritzmediums von den Transportbändern.

Weiters ist es aus der DE-OS 28 23 958 bei einer Spritzkabine in der die Gegenstände an Haken aufgehängt sind, bereits bekannt, mittels eines umlaufenden Bandes einen vertikalen Vorhang für den an den Gegenständen vorbeitretenden Teil des Spritzmediums auszubilden und dann das auf dem Band niedergeschlagene Spritzmedium mechanisch vom Band abzustreifen.

Die JP-A-30 26 370 zeigt eine Auffangvorrichtung für überschüssiges Spritzmedium mit automatisch bewegten Gegenständen und Auffangbändern, die sich in dieselbe Richtung bewegen wie die Gegenstände. Es erfolgt eine einstufige Abnahme des Spritzmediums vom Band im Bereich der Umlenkrollen für das Band.

Insbesondere bei größeren Anlagen (breiteren Bändern zum Auffangen des überschüssigen Spritzmediums) besteht das Problem einer möglichst vollständigen Abnahme des Spritzmediums vom Auffangband.

Dieses Problem wird durch die Merkmale des Anspruches 1 gelöst.

Es wird also zunächst auf dem Band, beispielsweise mittels angedrückter Lippen eine (oder mehrere) Spur des Spritzmediums am Band gebildet, dessen Breite wesentlich geringer ist als die Bandbreite. In einem zweiten Schritt wird dann diese Spritzmediumspur von einer Abnahmeeinheit vom Band vollständig abgenommen. Dabei lassen sich auch die Randbereiche des Bandes gut erfassen. Außerdem sind durch diese Trennung Spurbildung-Abnahme kleinere und ihren jeweiligen Funktionen besser angepaßte Bauteile möglich, die neben einer besseren Abnahme auch eine leichtere Handhabung (insbesondere Reinigung bei Farbwechsel ermöglichen).

Die Erfindung läßt sich in einer automatischen Vorrichtung zur Spritzbehandlung einsetzen, bei der die Gegenstände automatisch kontinuierlich oder schrittweise durch eine Fördereinrichtung bzw. Auflage bewegt werden. Um das an den Gegenständen vorbeitretende Spritzmedium möglichst vollständig sammeln und gegebenenfalls einer Wiederverwendung zuführen zu können, ist vorgesehen, daß die Auffangvorrichtung ein von der Fördereinrichtung unabhängiges, endlos umlaufendes Band aufweist und daß eine an diesem Band anliegende Abnahmevorrichtung zum Abnehmen von auf dem Band liegenden Spritzmedium vorgesehen ist, wobei auf diesem Band die erfindungsgemäße Spurbildung erfolgt.

Dabei wird man die Fördereinrichtung günstigerweise so ausbilden, daß sie dem Spritzmedium möglichst wenig Angriffsfläche bietet, was vorteilhaft beispielsweise durch zwei oder mehrere nebeneinanderliegende schmale Transportbänder möglich ist. Auf der den Spritzgüssen abgewandten Seite der Gegenstände läuft das endlose Auffangband um, von dem das auftreffende Spritzmedium mittels einer am Band anliegenden Abnahmevorrichtung abgenommen wird. Das endlos umlaufende Band zum Auffangen des überschüssigen Spritzmediums ist unabhängig von der Fördereinrichtung (vorzugsweise schmale nebeneinanderliegende Förderbänder) bewegbar. Damit besteht die Möglichkeit, die Fördergeschwindigkeit des Bandes zum Auffangen des Spritzmediums unabhängig von der Fördergeschwindigkeit der Gegenstände durch die Spritzanlage einzustellen. Es ist damit möglich, die Fördergeschwindigkeit beispielsweise durch einen stufenlosen Regelantrieb des Bandes an die jeweils verwendeten Spritzmedien anzupassen. Insbesondere ist es möglich, das Band zum Auffangen des überschüssigen Spritzmediums wesentlich schneller laufen zu lassen, als die für den Transport der Gegenstände durch die Spritzeinrichtung verantwortliche Fördereinrichtung. Damit kann vor allem bei lösungsmittelhältigen Lacken ein übermäßiges Verdunsten von Lösungsmittel verhindert werden, was einerseits die Umwelt schont und andererseits wegen der geringeren Zähigkeit eine leichtere Abnahme des Lackes vom Band erlaubt.

Das Band zum Auffangen des Spritzmediums kann vorteilhaft quer zur Förderrichtung der Fördereinrichtung bewegbar sein. Damit ist eine platzgünstigere Anordnung des zum Auffangen des Spritzmediums vorgesehenen Bandes und der Abnahmevorrichtung vom Band, sowie der zugehörigen Antriebsaggregate möglich. Auch läßt sich eine solche Einrichtung zum Auffangen des überschüssigen Spritzmediums leicht an viele bestehende Typen von automatischen Vorrichtungen zur Spritzbehandlung nachrüsten.

Die erfindungsgemäße zweistufige Abnahme, bei der zunächst eine Spur des Spritzmediums aus dem Auffangband gebildet und diese dann über eine Abnahmevorrichtung abgenommen wird, läßt sich auch bei Vorrichtungen zur Spritzbehandlung einsetzen, bei denen die Gegenstände nicht automatisch durch eine Fördereinrichtung bewegt werden, sondern auch in betriebfesten Auflagen aufliegen. Auch weitere vorteilhafte Merkmale der Erfindung lassen sich sowohl bei Spritzbehandlungsvorrichtungen mit einem automatischen Transport der Gegenstände, als auch bei solchen mit im Betrieb feststehenden Auflagen einsetzen. Um diese beiden Möglichkeiten mit einem Begriff zu erfassen, wird in der vorliegenden Anmeldung der Begriff Auflage sowohl für im Betrieb feste Auflagen, als auch für bewegte Auflagen (Obertrum der Fördereinrichtung) einer automatischen Spritzbehandlungsvorrichtung verwendet.

Weitere Vorteile und Einzelheiten der Erfindung werden anhand der nachfolgenden Figurenbeschreibung näher erläutert.

Es zeigen:
- Fig. 1: eine schematische Seitenansicht auf ein Ausführungsbeispiel der erfindungsgemäßen Vorrichtung der Spritzbehandlung, bei der die Gegenstände automatisch über eine Fördereinrichtung bewegt werden,
- Fig. 2: eine schematische Draufsicht auf dieses Ausführungsbeispiel,
- Fig. 3: eine Seitenansicht des Bandes zum Auffangen des überschüssigen Spritzmediums samt einer Abnahmevorrichtung,
- Fig. 4: eine Draufsicht auf die Fig. 3 und
- Fig. 5: eine Vorderansicht auf die Fig.3,
- Fig. 6: ein Detail einer Einrichtung zum Aufbringen eines Zusatzmittels (Lösungsmittels) und einer Lippe als Spurbildungsmittel,
- Fig. 7: eine Draufsicht auf die Fig. 6,
- Fig. 8: eine Vorrichtung zur Spritzbehandlung, bei der die Gegenstände auf in betriebfesten Auflagen aufliegen, mit einer Ausführungsform des erfindungsgemäßen Systems zum Auffangen und Sammeln des überschüssigen Spritzmediums,
- Fig. 9: eine Draufsicht auf die Fig. 8,
- Fig. 10 und 11: ein Ausführungsbeispiel in einer Seitenansicht, bei dem die Auflagen samt dem Band zum Auffangen des überschüssigen Spritzmediums hochgeklappt werden können,
- Fig. 12: einen schematischen Längsschnitt durch einen Teil eines Ausführungsbeispiels eines Bandes zum Auffangen von überschüssigem Spritzmaterial,
- Fig. 13: eine stark schematisierte Darstellung zur Illustration der Wiederverwendung des aufgefangenen Spritzmediums (Lackes),
- Fig. 14a bis f: Varianten der Erfindung in einer Draufsicht auf das Band zum Auffangen von überschüssigem Lackmaterial,
- Fig. 15a bis e: Varianten der Erfindung in einer schematischen Seitenansicht auf das Band zum Auffangen von überschüssigem Spritzmedium,
- Fig. 16a bis c: Varianten des Bandes mit Aufbringung von Zusatzmitteln,
- Fig. 17a bis c: Varianten des Bandes mit Bandführung im Dreieck, und
- Fig. 18: eine spezielle Bandauflage.

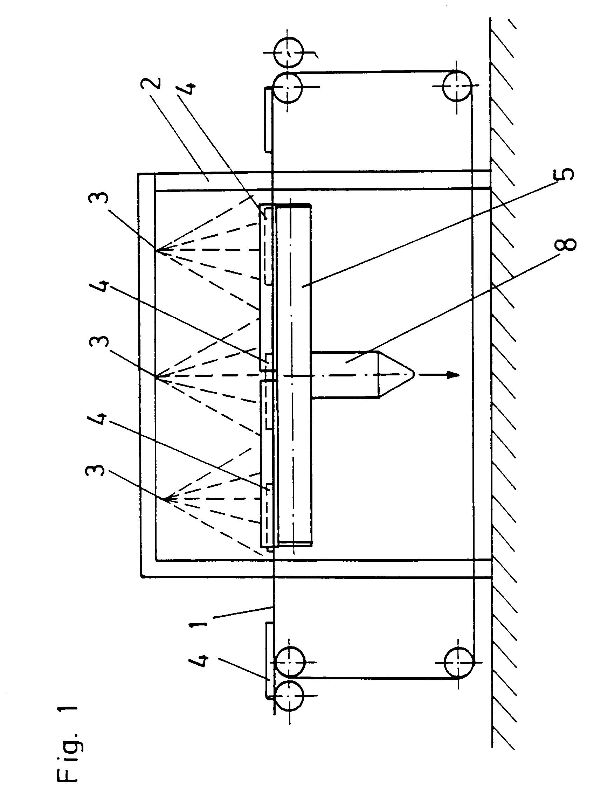

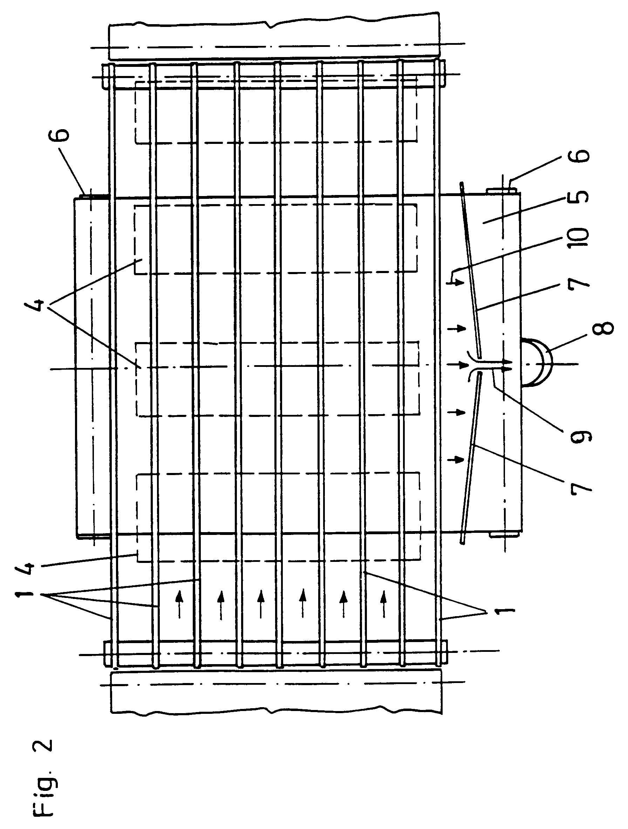

Die Fig. 1 und 2 zeigen eine automatische Vorrichtung zur Spritzbehandlung (Spritzlackierung) von Gegenständen mit einer Fördereinrichtung 1, welche die zu lackierenden Gegenstände durch die eigentliche Spritzkabine 2 bewegen. Über nicht im Detail gezeigte Spritzdüsen 3 wird das Spritzmedium von oben auf die Gegenstände 4 aufgetragen.

Zum Auffangen des an den Gegenständen 4 vorbeigehenden Spritzmediums ist knapp unterhalb der Fördereinrichtung 1 ein endlos umlaufendes Band 5 vorgesehen. Das Obertrum des endlosen Bandes, welches über Umlenkwalzen 6 (von denen eine angetrieben ist) geführt ist, liegt parallel knapp unterhalb der Auflagen für die Gegenstände 4, welche beim vorliegenden Ausführungsbeispiel durch mehrere endlos umlaufende, schmale Transportbänder der Fördereinrichtung 1 gebildet sind. Der Zwischenraum zwischen den Transportbändern ist größer als die Bandbreite selbst, damit die Transportbänder dem Spritzmedium möglichst wenig Angriffsfläche bieten und das meiste nicht auf die Gegenstände gelangende Spritzmedium auf das Band 5 gelangt. Das Band zum Auffangen des Spritzmediums läuft quer zur Förderrichtung der Fördereinrichtung 1. Dies erlaubt eine knappe parallele Führung des Bandes 5 unterhalb der Transportbänder 1, wobei die noch zu beschreibenden Spurbildungslippen 7 und das Abnahmerohr 8 seitlich außerhalb der Fördereinrichtung 1 angeordnet werden können. Damit werden die Platzverhältnisse optimal ausgenützt und das erfindungsgemäße Auffangband samt Abnahmevorrichtung kann bei bestehenden automatischen Spritzanlagen nachgerüstet werden. Die knappe Führung des Bandes (0,2 mm bis 5 cm, vorzugsweise 0,2 mm bis 2 cm) unterhalb der Auflage für die Gegenstände 4 verhindert ein unerwünschtes Auftreffen von überschüssigem Lackmaterial (Overspray) auf die Unterseite der Gegenstände 4.

Gemäß einem Merkmal der Erfindung erfolgt die Abnahme des auf dem Band 5 aufliegenden Spritzmediums dadurch, daß zuerst über Spurbildungsmittel eine gegenüber der Bandbreite schmälere Spur 9 des Spritzmediums gebildet wird, welche dann über eine am Band anliegende Abnahmevorrichtung vom Band abgenommen wird. Beim vorliegenden Ausführungsbeispiel bestehen die genannten Spurbildungsmittel aus zwei federnd an das Band 5 andrückbaren Lippen 7, die leicht schräg zur Förderrichtung 10 des Bandes 5 gestellt sind und damit eine einzige in der Mitte des Bandes 5 verlaufende Spur 9 des Spritzmediums bilden. Diese Spur 9 kann von einem von unten an das Band federnd angedrückten Abnahmerohr 8 leicht und vollständig abgenommen werden.

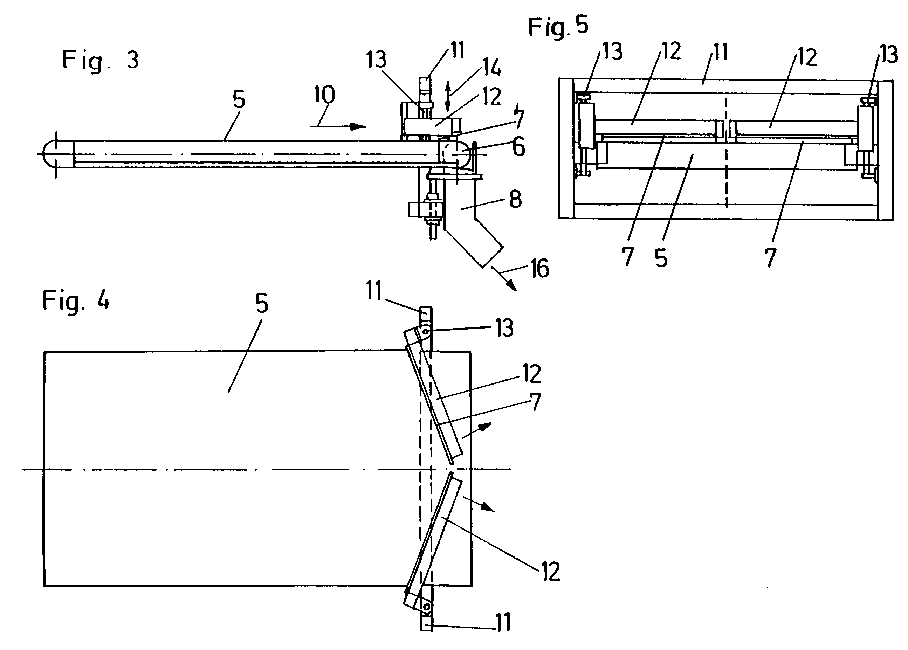

In den Fig. 3 bis 5 sind das Band 5 und weitere Details des Abnahmesystems für das Spritzmedium dargestellt. Auf einem Rahmen 11 sind Arme 12 für die Lippen 7 um eine Hochachse 13 schwenkbar gelagert. Außerdem können die Arme 12 in Richtung der Teile 14 bewegt werden, das heißt vom Band 5 abgehoben bzw. daran angedrückt werden. In Betrieb ist die Winkelstellung der Trägerarme 12 etwa so wie dies in der Fig. 4 sichtbar ist, wobei zwischen den Lippen 7 in der Bandmitte ein kleiner Abstand bleibt, durch den die von den Lippen 7 gebildete Spur des Lackes austritt. In Betrieb wird diese Winkelstellung durch geeignete Anschläge eingehalten, wobei die Trägerarme 12 samt Lippen 7 in vertikaler Richtung von oben auf das Band 5 gedrückt werden. Dazu können beispielsweise nicht näher dargestellte Federn oder pneumatische Einrichtungen vorgesehen sein. Zum Reinigen der Lippen 7 können die Arme 12 angehoben und um die Hochachsen nach vor geschwenkt werden. Dies ist vor allem bei Farbwechseln ein entscheidender Handhabungsvorteil.

Zur Abnahme der von den Lippen 7 gebildeten mittigen Lackspur auf dem Band 5 ist ein Abnahmerohr 15 vorgesehen, das von unten federnd (beispielsweise über eine nicht dargestellte Federeinrichtung, eine Pneumatikeinrichtung) an das Band 5 angedrückt wird. Die Auflagestelle des Rohrrandes liegt bei diesem Ausführungsbeispiel knapp hinter der Umlenkrolle 6. An dieser Stelle ist ein sattes Andrücken des Rohrrandes an das Band 5 möglich. Die vollständig abgenommene Spritzmediumsspur tritt in Richtung des Teiles 16 unten aus dem Rohr 15 aus und kann in einem Auffangbehälter gesammelt werden. Von diesem ist eine Wiederverwendung des Lackes möglich. Das Rohr 15 ist ebenfalls in vertikaler Richtung absenkbar und gegebenenfalls anschließend abnehmbar und kann damit leicht gereinigt werden. Grundsätzlich sind auch andere Abnahmevorrichtungen, wie beispielsweise leicht zu reinigende Rinnen möglich.

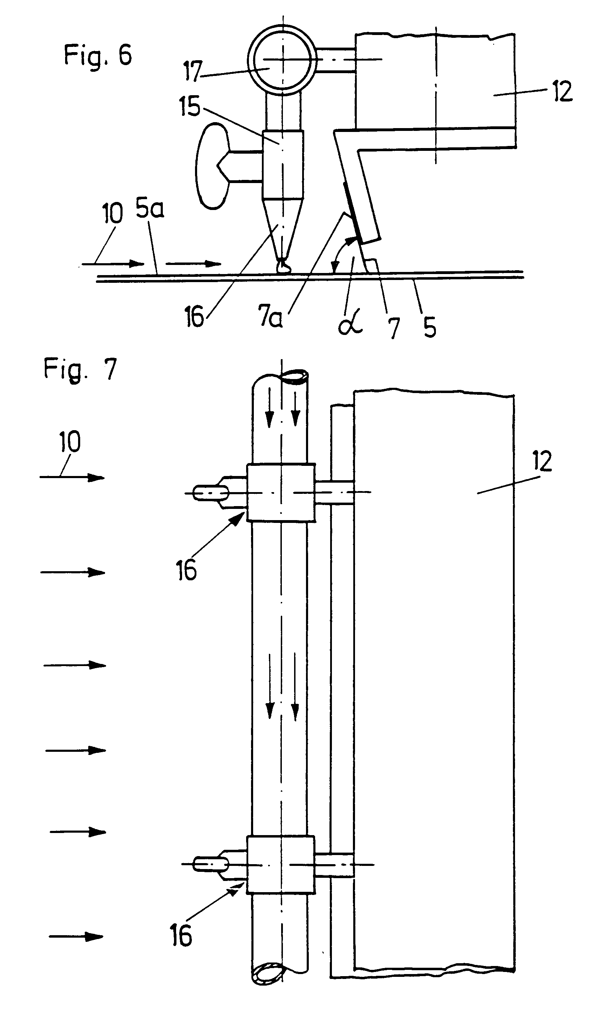

Um insbesondere bei Lösungsmittellacken die ursprüngliche Viskosität herzustellen und/oder die Spurbildung bzw. Abnahme des auf dem Band 5 aufliegenden Spritzmediums zu erleichtern, kann gemaß einer bevorzugten Ausführungsform vorgesehen sein, daß knapp vor der Abnahmevorrichtung 8 bzw. knapp vor den Spurbildungsmitteln (Lippen 7) eine Einrichtung 15 zum Aufbringen eines Zusatzmittels, vorzugsweise eines Lacklösungsmittels angeordnet ist. Diese Einrichtung 15 kann eine durchgehende Versorgungsleitung 17 für das Zusatzmittel und mehrere über die Breite des Bandes 5 verteilte Düsen 16 aufweisen. Das Zusatzmittel kann auf die verschiedenste Art und Weise aufgebracht werden. Beispielsweise ist ein Aufsprühen oder ein Aufträufeln möglich. Vorteilhafterweise bildet die Einrichtung 15 zum Aufbringen des Zusatzmittels und die Spurbildungseinrichtung Lippen 7 eine bauliche Einheit, indem sie wie in Fig. 6 und 7 gezeigt, gemeinsam an dem Trägerarm 12 befestigt sind. Damit läßt sich die Einrichtung 15 immer in genau definierter relativer Lage zu den Lippen 7 einstellen und gemeinsam mit diesen vom Band wegbewegen.

Wie die Fig. 6 zeigt, schließt die dem Spritzmedium zugewandte Seite 7a der Lippe 7 mit der Bandoberfläche 5a einen spitzen Winkel α ein. Dies hat sich im Hinblick auf eine gute Spurbildungsfunktion und einen geringen Materialverschleiß am Band 5 als vorteilhaft erwiesen.

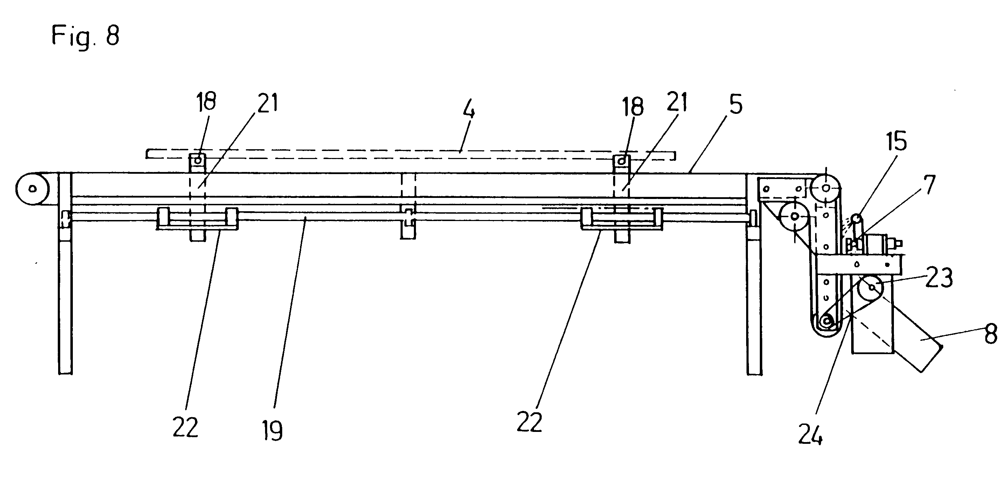

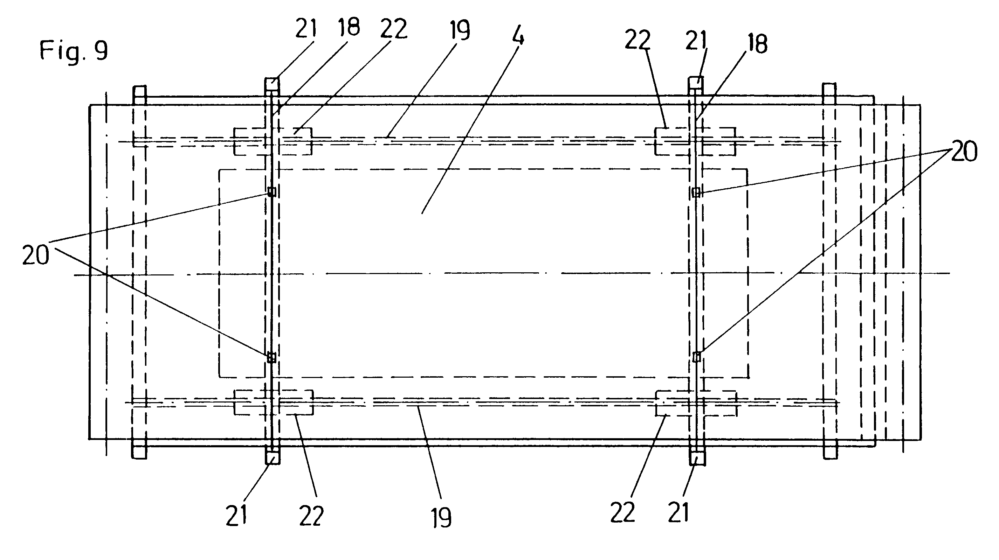

In den Fig. 8 und 9 ist eine Vorrichtung zur Spritzbehandlung von Gegenständen 4 gezeigt, bei der der Gegenstand 4 im Betrieb auf festen Auflagen aufruht und nicht automatisch transportiert wird. Die Auflagen werden durch dünne Drähte 18 gebildet, die quer über das endlos umlaufende Band 5 gespannt sind. Die Drähte 18, auf denen der Gegenstand 4 über Auflageteile 20 an den Drähten 18 aufliegt, sind seitlich in Haltern 21 gehalten, die auf Wagen 22 befestigt sind. Die Wagen 22 können auf Schienen 19 in Förderrichtung des Bandes verstellt werden und erlauben damit eine Anpassung an den aufzulegenden Gegenstand 4. Grundsätzlich könnten diese Wagen 18 zum automatischen Transport eines Gegenstandes verwendet werden. Beim dargestellten Ausführungsbeispiel in den Fig. 8 und 9 ist jedoch daran gedacht, die Wagen vor dem Auflegen des Gegenstandes in die entsprechende Position entlang den Schienen 19 zu verschieben und dann dort festzuklemmen.

Das Obertrum des endlosen Bandes 5 läuft knapp unterhalb der Auflagen 18 vorbei und verhindert damit ein unbeabsichtigtes Niedersetzen von Overspray auf der Unterseite des Gegenstandes 4. Die dünnen Drähte 18 bieten kaum eine Angriffsfläche für das Spritzmedium, welches damit vollständig von dem darunterliegenden Band 5 aufgefangen werden kann, sofern es nicht ohnehin den Gegenstand 4 trifft. Zur Abnahme des auf dem Band 5 aufliegenden überschüssigen Spritzmediums ist an dem vertikalen Bereich des ingesamt L-förmig geführten Bandes 5 ein Abnahmesystem vorgesehen. Dieses weist eine Einrichtung 15 zum Aufbringen von Lösungsmitteln, eine Spurbildungseinrichtung in Form einer oder mehrerer Federn an das Band 5 angepreßter Lippen und schließlich eine Abnahmevorrichtung 8 in Form eines Rohres auf. Das Band 5 wird über einen Antrieb 23 und Riemen 24 angetrieben.

Die in Fig. 8 gezeigte Abnahme an einem vertikalen Bereich des Bandes 5 erlaubt eine platzgünstige und leicht zugängliche Anordnung der einzelnen Komponenten.

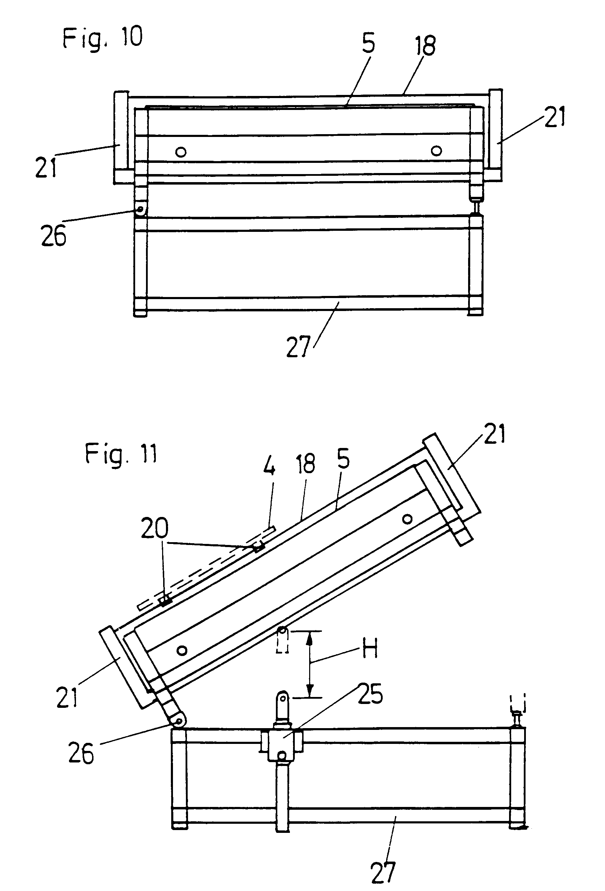

Um beim händischen Spritzen von Gegenständen 4, die auf rutschsicheren Auflagen 20 auf den Drähten 18 aufliegen, ist gemäß einer bevorzugten Variante der Erfindung vorgesehen, daß die Auflage (Drähte 18 samt Teilen 20) mit dem Band 5 zum Auffangen des überschüssigen Spritzmediums um eine horizontale Achse 26 schwenkbar an einem Grundkörper 27 gelagert ist. Zum Hochschwenken kann eine beispielsweise pneumatische Verstelleinrichtung 25 vorgesehen sein, die wie in Fig. 11 gezeigt, einen Hub H aufweist. Durch das gemeinsame Hochschwenken von Auflage und Band bleibt die relative Lage zwischen Gegenstand und Auffangband fix. Insbesondere kann das Band 5 weiterhin knapp unterhalb der Gegenstände 4 geführt werden. Das Hochschwenken erlaubt eine gute Zugänglichkeit der Oberfläche der Gegenstände 4 für eine händische Lackauftragung über eine nicht näher dargestellte Spritzpistole.

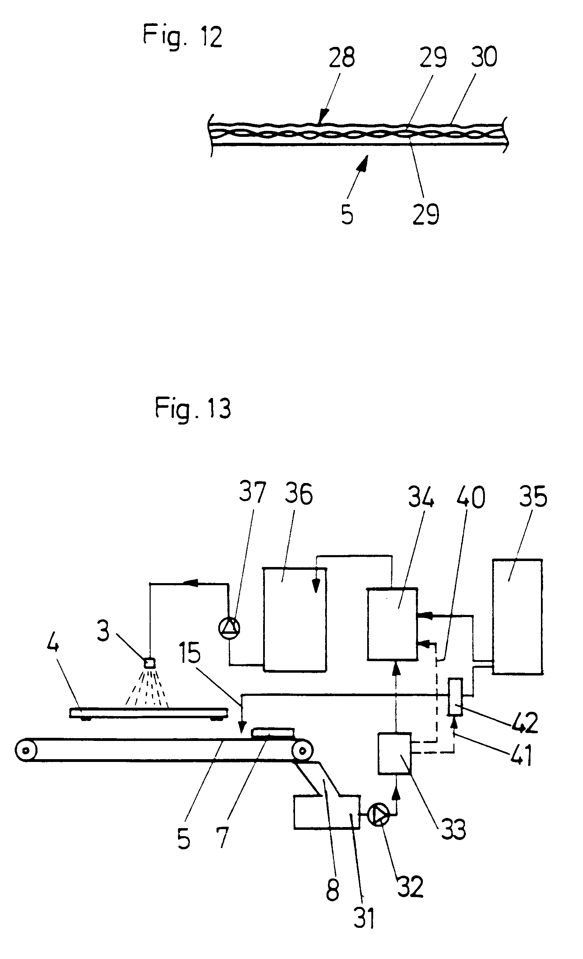

Für die gute Abnahme des auf dem Band aufliegenden Spritzmediums ist neben den genannten spurbildenden Lippen und dem Abnahmerohr auch das Band 5 selbst von Bedeutung. Es hat sich als günstig erwiesen, wenn das Band 5 zum Auffangen des Spritzmediums eine Oberflächenstruktur 28, also eine nicht ganz glatte Oberfläche aufweist (Fig. 12). Wenn das Band ein strukturiertes Basisgewebe aufweist, so kann diese Oberflächenstruktur, das heißt geringe Erhöhungen und Vertiefungen dadurch gegeben sein, daß sich das strukturierte Basisgewebe 29 (beispielsweise aus Polyester in Kette und Schuß) durch eine dünne daraufliegende Beschichtung (beispielsweise einige Zehntel Millimeter Urethan) durchzeichnet. Diese strukturierte Oberfläche hat auch Vorteile im Hinblick auf eine möglichst geringe Reflexion der auf das Band 5 auftreffenden Spritzmediumspartikel. Besonders günstig im Hinblick auf eine gute Lackabnahme vom Band 5 ist eine Shore-Härte nach DIN 53505 im Bereich von 70-100.

In Fig. 13 ist schematisch dargestellt, wie sich das von Band 5 über die Lippen 7 und das Abnahmerohr 8 abgenommene Spritzmedium wiederverwenden läßt. Das Spritzmedium gelangt aus dem Rohr in einen Vorratsbehälter 31 und von dort über eine Pumpe 32 in eine Einrichtung 33 zur Erfassung der Viskosität. In der Einrichtung 34 wird aus einem Lösungsmittelbehälter 35 in Abhängigkeit (Steuerleistung 40) von der erfaßten Viskosität 33 Lösungsmittel zugegeben, um die Viskosität des Spritzmittels auf einen vorgegebenen Wert zurückzuführen. Da die Bandgeschwindigkeit des Bandes 5 sehr hoch gewählt werden kann, entweicht auf dem Weg bis zur Abnahmestelle kaum Lösungsmittel, sodaß sich die Zugabe des Lösungsmittels auf geringe Mengen beschränkt. Das wiederaufbereitete Spritzmedium gelangt dann in den Vorratsbehälter 36, aus dem über eine Pumpe 37 zu den eigentlichen Spritzdüsen 3 gefördert wird. Wesentlich an der Fig. 13 ist die Tatsache, daß das vom Band abgenommene Spritzmedium in einen automatischen Kreislauf letztendlich wieder den Düsen 3 zugeführt wird und damit nicht entsorgt werden muß. Damit verringert sich nicht nur die Umweltbelastung, sondern es werden auch erhebliche Kosten an Material eingespart.

Alternativ der zusätzlich zur Zugabe in der externen Einrichtung 34 kann das Lösungsmittel zur Viskositätskorrektur auch vor der Abnahme vom Band 5 dem auf dem Band aufliegenden Spritzmedium zugeführt werden(,was außerdem die Abnahme erleichtert). Die Lösungsmittelzugabe kann ungeregelt erfolgen, beispielsweise nach händisch eingestellten Erfahrungswerten. Günstiger erscheint jedoch (wie dies in Fig. 13 gezeigt ist), eine über die Leitung 41 und die Dosiereinrichtung 42 in Abhängigkeit von der erfaßten Viskosität geregelte Zugabe des Lösungsmittels. Es ist auch denkbar, über die Einrichtung 15 einfach vorbestimmte Mengen an Lösungsmittel zuzugeben und dann in der Einrichtung 34 eine Nachregelung auf die richtige Viskosität vorzunehmen.

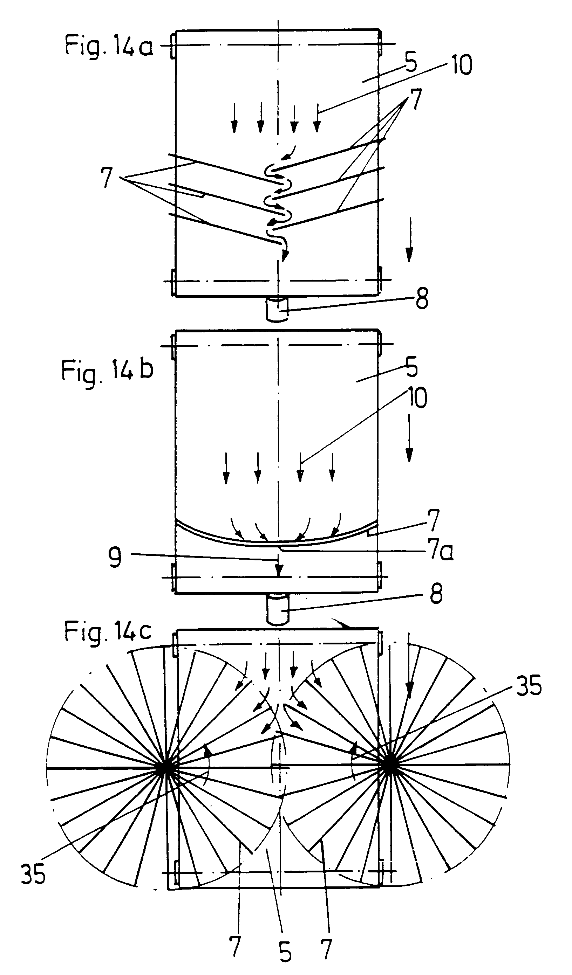

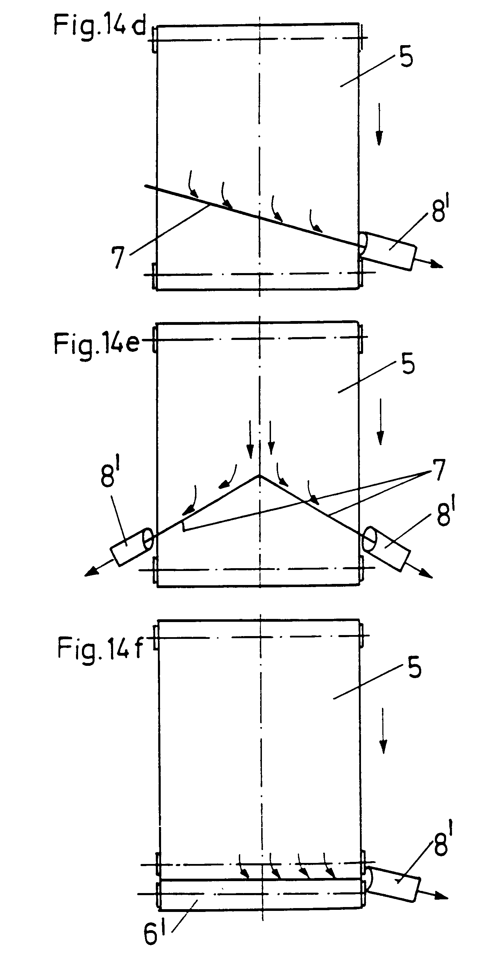

In den Fig. 14a bis f sind Varianten der Erfindung dargestellt. In Fig. 14a sind mehrere hintereinander angeordnete Lippen 7 vorgesehen, die in Förderrichtung 10 im mittleren Bereich hintereinander überlappen. Diese Anordnung zeichnet sich durch eine besonders vollständige Entfernung vom Spritzmedium auf dem Band 5 aus. Dabei sei erwähnt, daß eine vollständige Entfernung von Spritzmedium vom Band 5 bei der vorliegenden Erfindung zwar günstig, aber im Gegensatz zu den Transportbändern früherer Einrichtungen nicht absolut notwendig ist. Bei den früheren Transportbändern hingegen war eine absolut vollständige Reinigung nötig, um eine Verschmutzung der neu aufgelegten Gegenstände sicher zu vermeiden. Beim erfindungsgemäßen Band 5 stört eine geringfügig herumtransportierte Menge an Spritzmedium die Funktionsweise grundsätzlich nicht. Um das Band 5 vor Farbwechsel zu reinigen, kann vorgesehen sein, daß das Band nach Beendigung des Aufspritzens noch nachläuft und damit endgültig von der vorhergehenden Farbe gereinigt wird. Dies kann durch eine entsprechende Steuervorrichtung des Bandantriebes leicht erzielt werden.

Bei der in Fig. 14b dargestellten Variante ist eine einzige gebogene Lippe 7 mit zentraler Durchlaßöffnung 7a zur Bildung einer schmalen Spur 9 vorgesehen, welche vom Abnahmerohr 8 abgenommen werden kann. Bei dem in Fig. 14c dargestellten Ausführungsbeispiel sind die Lippen 7 in Richtung der Pfeile 35 drehbar gelagert.

Bei den in den Fig. 14b und e dargestellten Ausführungsbeispielen erfolgt eine einstufige Abnahme, das heißt es erfolgt keine Spurbildung auf dem Band 5, vielmehr wird das auf dem Band 5 aufliegende Spritzmedium entlang der Lippen 7 seitlich in ein Rohr 8' geleitet.

Bei dem in Fig. 14f dargestellten Ausführungsbeispiel erfolgt die Abnahme in ein seitliches Rohr 8' durch eine gegenläufige Rolle 6', um die auch ein weiteres endlos geführtes Band geführt sein kann.

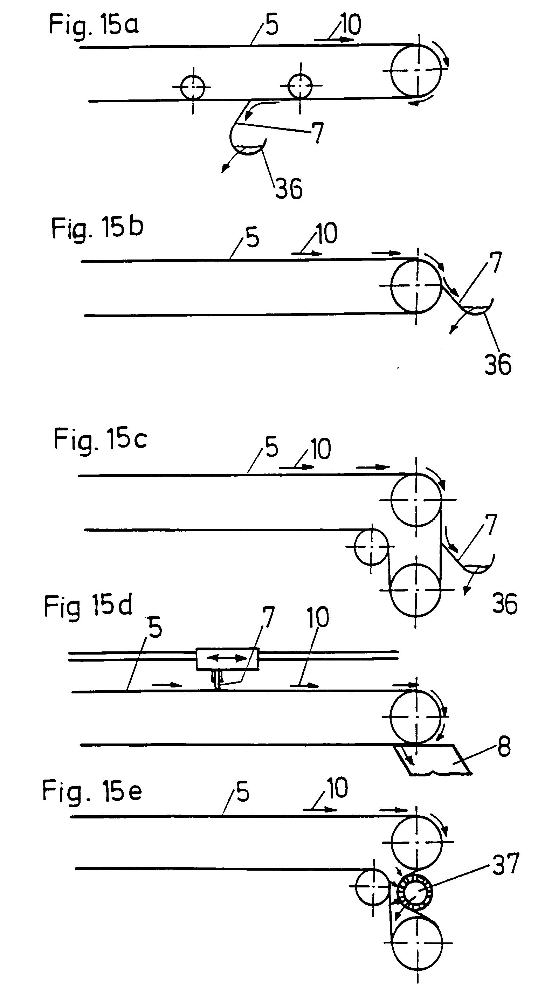

In den Fig. 15a bis e sind weitere Ausführungsformen der Erfindung dargestellt. Bei dem in Fig. 15a und b dargestellten Varianten erfolgt die Abnahme in eine Rinne 36, wobei die abnehmende Lippe 7 einstückig mit der Rinne 36 ausgebildet ist. Wie die Fig. 15c zeigt, kann diese Rinne 36 an einen vertikalen Teil des L-förmig umgelenkten Bandes 5 ansetzen. Die Lippe 7 kann gemäß Fig. 15d in Förderrichtung 10 des Bandes auch verstellbar sein. Bei der in Fig. 15e dargestellten Variante ist eine Walze 37 mit perforiertem Mantel vorgesehen, um die das Band 5 herumgeführt ist. Die Oberseite des Bandes liegt dabei an der Mantelfläche der Walze 37 an, wobei das Spritzmedium ins Innere der Walze 37 gelangt und von dort axial ausströmen kann.

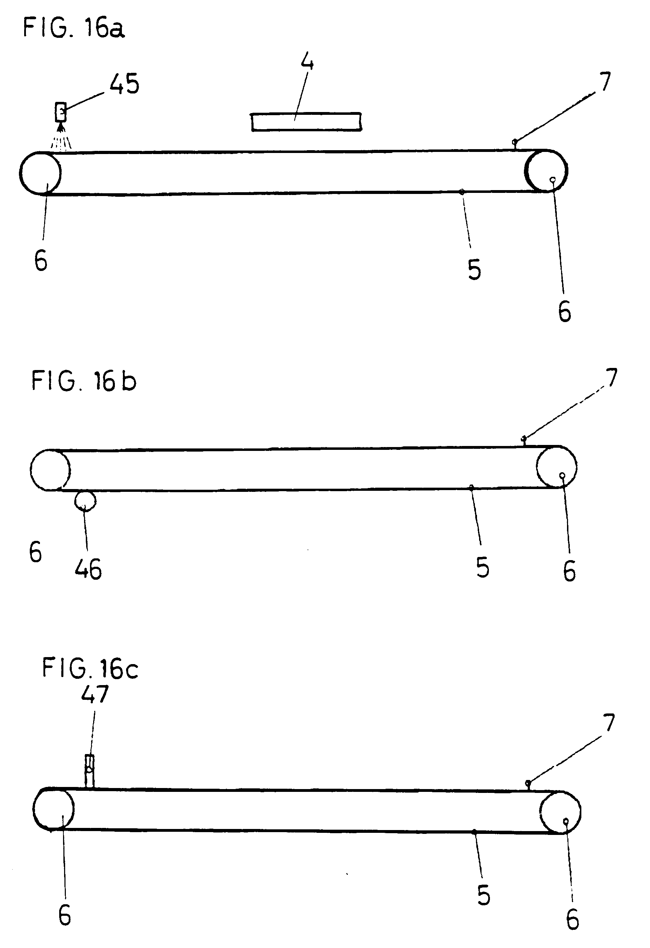

Wie bereits im Zusammenhang mit den Fig. 6 und 7 beschrieben worden ist, kann der Auftrag eines Zusatzmittels, insbesondere eines Lösungsmittels des verwendeten Lacks, für eine verbesserte Abnahme und Wiederverwertung des Lacks günstig sein. In den Fig. 16a bis c sind Varianten gezeigt, wie dieses Zusatzmittel aufgebracht werden kann.

In Fig. 16a ist eine Spritzdüse 45 vorgesehen, um das Zusatzmittel auf das Band 5 aufzubringen. Gemäß Fig. 16b ist eine Auftragwalze 46 an der Bandunterseite vorgesehen, die das Zusatzmittel gleichmäßig auf das Band 5 aufträgt. Ein solcher Auftrag kann auch über einen Filzstreifen 47 erfolgen, wie dies in Fig. 16c gezeigt ist.

Bei dem in den Fig. 16a bis c dargestellten Varianten erfolgt der Auftrag des Zusatzmittels auf das Band 5 vor dem mittleren Bereich des Bandes 5 in dem das an den Gegenständen vorbeitretende Spritzmedium auf das Band auftrifft. Wenn das Spritzmedium auf das Band auftrifft ist dieses also bereits mit einem Zusatzmittel versehen, das später die Abnahme über die Lippe 7 oder ein nicht dargestelltes Abnahmerohr od.dgl. erleichtert.

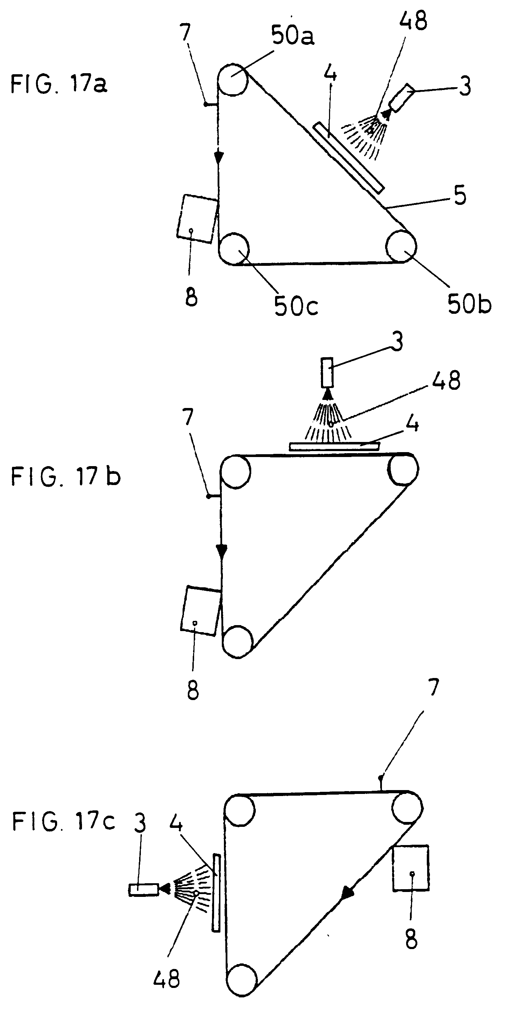

In den Fig. 17a bis c sind Varianten der Bandführung für das Band 5 der Auffangvorrichtung gezeigt, wobei das Band 5 über im Dreieck angeordnete Balken 50a, 50b und 50c geführt ist. Dies erlaubt es, bei kompakter Bauweise und geringer Bandlänge das Aufspritzen des Spritzmediums 48 über die Düsen 3 einerseits und die Abnahme des an den Gegenständen 4 vorbeitretenden Spritzmediums 48 vom Band 5 mittels der Vorrichtungen 7 und 8 andererseits an räumlich gut voneinander getrennten Stellen an verschiedenen Seiten des Dreiecks vorzunehmen. Die Abnahme kann insbesondere durch vorhergehende Spurbildung über Lippen 7 und anschließende Abnahme dieser Spur über ein Abnahmerohr 8 erfolgen.

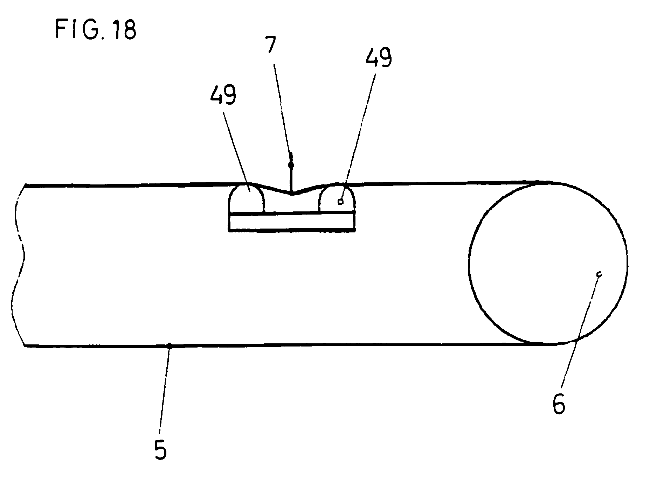

Um ein gutes Anliegen der spurbildenden Lippen 7 am Band 5 zu gewährleisten, können zwei abgerundete Auflagen 49 vorgesehen sein, wie dies in Fig. 18 dargestellt ist. Zwischen diesen beiden abgerundeten Auflagen 49 ist das Band frei, also nicht von einer Auflage unterstützt. In diesem Bereich ist von oben eine in Fig. 18 schematisch dargestellte spurbildende Lippe 7 angedrückt.

Die Lippen 7, die Abnahmevorrichtung 8 und/oder Auffang- oder Vorratsbehälter für abgenommenes Spritzmedium können gekühlt sein. Dies erhöht die sogenannte "Topfzeit", während der die Lacke wiederverwendet werden können, was vor allem bei 2-Komponenten-Lacken von Vorteil ist.

## Patentansprüche

1. Vorrichtung zur Spritzbehandlung von Gegenständen, insbesondere zur Spritzlackierung, mit einer Auflage für die Gegenstände und mit einer Auffangvorrichtung zum Auffangen des an den Gegenständen und der Auflage vorbeitretenden Spritzmediums, bei der die Auffangvorrichtung ein von der Auflage unabhängiges, endlos umlaufendes Band (5) aufweist, dadurch gekennzeichnet, daß am Band anliegende Mittel (7) zum Zusammenführen von auf dem Band (5) aufliegendem Spritzmedium zu mindestens einer gegenüber der Bandbreite schmäleren Spur (9) des Spritzmediums vorgesehen sind und daß weiters eine in Förderrichtung (10) hinter den genannten Spurbildungsmitteln (7) angeordnete, am Band (5) anliegende Abnahmevorrichtung (8) zur Abnahme der Spur(en)(9) vom Band (5) vorgesehen ist.

2. Vorrichtung nach Anspruch 1, dadurch gekennzeichnet, daß die Spurbildungsmittel (7) eine einzige, vorzugsweise in der Mitte des Bandes aufliegende Spur (9) des Spritzmediums bilden.

3. Vorrichtung nach Anspruch 1 oder 2, dadurch gekennzeichnet, daß die Spurbildungsmittel (7) und/oder die Abnahmevorrichtung (8)mindestens eine schräg zur Förderrichtung (10) des Bandes (5) gestellte, am Band (5) vorzugsweise federnd andrückbare Lippe (7) umfaßt.

4. Vorrichtung nach Anspruch 3, dadurch gekennzeichnet, daß die Lippe (7) auf einem gegenüber dem Band (5)verstellbaren Trägerarm (12) befestigt ist.

5. Vorrichtung nach Anspruch 3 oder 4, dadurch gekennzeichnet, daß die Lippe (7) aus einem in sich elastischen Material, vorzugsweise Metall besteht.

6. Vorrichtung nach einem der Ansprüche 3 bis 5, dadurch gekennzeichnet, daß die dem Spritzmedium zugewandte Seite der Lippe mit der Bandoberfläche einen spitzen Winkel (α) einschließt.

7. Vorrichtung nach einem der Ansprüche 1 bis 6, mit einer Fördereinrichtung zum Transport der vorzugsweise darauf aufliegenden Gegenstände, dadurch gekennzeichnet, daß das Band (5) zum Auffangen des Spritzmediums quer zur Förderrichtung der Fördereinrichtung (1) bewegbar ist.

8. Vorrichtung nach einem der Ansprüche 1 bis 7, dadurch gekennzeichnet, daß die Abnahmevorrichtung zumindest ein am Band (5) vorzugsweise federnd andrückbares Rohr (8) aufweist.

9. Vorrichtung nach Anspruch 8, dadurch gekennzeichnet, daß das Rohr im Bereich einer Umlenkrolle (6) für das Band (5) an das Band (5) angedrückt ist.

10. Vorrichtung nach einem der Ansprüche 1 bis 9, dadurch gekennzeichnet, daß eine Einrichtung zum Aufbringen des Zusatzmittels, vorzugsweise eines Lacklösungsmittels auf das Band (5) vorgesehen ist.

11. Vorrichtung nach Anspruch 10, dadurch gekennzeichnet, daß die Einrichtung zum Aufbringen des Zusatzmittels zumindest eine Düse (45) zum Aufsprühen des Zusatzmittels umfaßt.

12. Vorrichtung nach Anspruch 10 oder 11, dadurch gekennzeichnet, daß die Einrichtung zum Aufbringen des Zusatzmittels zumindest eine am Band (5) anliegende Auftragswalze (46) für das Zusatzmittel umfaßt.

13. Vorrichtung nach einem der Ansprüche 10 bis 12, dadurch gekennzeichnet, daß die Einrichtung zum Aufbringen des Zusatzmittels zumindest einen mit dem Band (5) in Kontakt stehenden Auftrager (47) aus porösem und fasrigem Material, insbesondere Filz, umfaßt.

14. Vorrichtung nach einem der Ansprüche 10 bis 13, dadurch gekennzeichnet, daß die Einrichtung zum Aufbringen des Zusatzmittels - in Förderrichtung des Bandes (5) gesehen - vor jenem Bereich angeordnet ist, auf den das an den Gegenständen (4) vorbeitretende Spritzmedium auf das Band (5) auftriftt.

15. Vorrichtung nach einem der Ansprüche 1 bis 14, dadurch gekennzeichnet, daS die Auflage (18) dünne Drähte, Fäden oder dergleichen aufweist, die über dem Band (5) gespannt sind, wobei diese Fäden, Drähte oder dergleichen zwischen Haltern (21) gespannt sind, die auf verschiebbaren Wagen (22) angebracht sind.

16. Vorrichtung nach einem der Ansprüche 1 bis 15, dadurch gekennzeichnet, daß das Band (5) zum Auffangen des Spritzmediums eine Oberflächenstruktur (28) aufweist.

17. Vorrichtung nach einem der Ansprüche 1 bis 16, dadurch gekennzeichnet, daß die Umlaufgeschwindigkeit des Bandes (5) zum Auffangen des Spritzmediums - vorzugsweise stufenlos - regelbar ist.

18. Vorrichtung nach einem der Ansprüche 1 bis 16, dadurch gekennzeichnet, daß die Umlaufgeschwindigkeit des Bandes (5) zum Auffangen des Spritzmediums höher ist als die Transportgeschwindigkeit der Fördereinrichtung (1).

19. Vorrichtung nach einem der Ansprüche 1 bis 18, dadurch gekennzeichnet, daß das vom Band abgenommene Spritzmedium gesammelt und einem Vorratsbehälter (36) für das Spritzmedium zugeführt wird, wobei die Viskosität des abgenommenen Spritzmediums erfaßt und - zur Herstellung einer bestimmten Viskosität des Spritzmediums - Lösungsmittel in Abhängigkeit von der erfaßten Viskosität dem Spritzmedium zugegeben wird.

20. Vorrichtung nach einem der Ansprüche 1 bis 19, dadurch gekennzeichnet, daß die Abnahmevorrichtung (7, 8) und/oder der Vorratsbehälter (36) zumindest teilweise gekühlt sind.

21. Vorrichtung nach einem der Ansprüche 1 bis 20, dadurch gekennzeichnet, daß das Band (5) über zwei vorzugsweise abgerundete Auflagen (49) geführt ist und zumindest ein Teil der Spurbildungsmittel (7) oder der Abnahmevorrichtung (8) gegen das zwischen den Auflagen (49) freie Band (5) gedrückt ist.

## Claims

1. Apparatus for spray treating articles, in particular for spray painting articles, comprising a support for the articles and a collector device for collecting the spray medium which passes the articles and the support, wherein the collector device has an endlessly circulating belt (5) which is independent of the support, characterised in that there are provided means (7) which bear against the belt for bringing spray medium which lies on the belt (5) together to form at least one line (9) of the spray medium, which is narrower than the belt width, and that there is further provided a removal device (8) which bears against the belt (5) and which is arranged downstream of said line-forming means (7) in the conveying direction, for removal of the line or lines (9) from the belt (5).

2. Apparatus according to claim 1, characterised in that the line-forming means (7) form a single spray medium line (9) which is preferably on the middle of the belt.

3. Apparatus according to claim 1 or claim 2, characterised in that the line-forming means (7) and/or the removal device (8) includes at least one lip (7) which is set inclinedly relative to the conveying direction (10) of the belt (5) and which can be preferably resiliently pressed against the belt (5).

4. Apparatus according to claim 3, characterised in that the lip (7) is fixed on a carrier arm (12) which is displaceable relative to the belt (5).

5. Apparatus according to claim 3 or claim 4, characterised in that the lip (7) comprises a material which is elastic in itself, preferably metal.

6. Apparatus according to one of claims 3 to 5, characterised in that the side of the lip which is towards the spray medium includes an acute angle (α) with the belt surface.

7. Apparatus according to one of claims 1 to 6, comprising a conveyor device for transporting the articles which preferably lie theron, characterised in that the belt (5) for collecting the spray medium is movable transversely to the conveying direction of the conveyor device (1).

8. Apparatus according to one of claims 1 to 7, characterised in that the removal device has at least one pipe (8) which can be preferably resiliently pressed against the belt (5).

9. Apparatus according to claim 8, characterised in that the pipe is pressed against the belt (5) in the region of a direction-changing roller (6) for the belt (5).

10. Apparatus according to one of claims 1 to 9, characterised in that there is provided a device for applying to the belt (5) an additional agent, preferably a paint solvent.

11. Apparatus according to claim 10, characterised in that the device for applying the additional agent includes at least one nozzle (45) for spraying on the additional agent.

12. Apparatus according to claim 10 or claim 11, characterised in that the device for applying the additional agent includes at least one applicator roller (46) for the additional agent, the roller bearing against the belt (5).

13. Apparatus according to one of claims 10 to 12, characterised in that the device for applying the additional agent includes at least one applicator (47) which is in contact with the belt (5) and which comprises porous or fibrous material, in particular felt.

14. Apparatus according to one of claims 10 to 13, characterised in that the device for applying the additional agent - as viewed in the conveying direction of the belt (5) - is arranged upstream of that region at which the spray medium that passes the articles (4) impinges onto the belt (5).

15. Apparatus according to one of claims 1 to 14, characterised in that the support (18) has thin wires, threads or the like which are stretched over the belt (5), wherein said threads, wires or the like are stretched between holders (21) which are mounted on displaceable carriages (22).

16. Apparatus according to one of claims 1 to 15, characterised in that the belt (5) for collecting the spray medium has a surface structure (28).

17. Apparatus according to one of claims 1 to 16, characterised in that the peripheral speed of the belt (5) for collecting the spray medium is - preferably steplessly - controllable.

18. Apparatus according to one of claims 1 to 16, characterised in that the peripheral speed of the belt (5) for collecting the spray medium is higher than the transportation speed of the conveyor device (1).

19. Apparatus according to one of claims 1 to 18, characterised in that the spray medium which is removed from the belt is collected and fed to a storage container (36) for the spray medium, the viscosity of the removed spray medium being detected and - to produce a given spray medium viscosity - solvent being added to the spray medium in dependence on the detected viscosity.

20. Apparatus according to one of claims 1 to 19, characterised in that the removal device (7, 8) and/or the storage container (36) are at least partially cooled.

21. Apparatus according to one of claims 1 to 20, characterised in that the belt (5) is guided over two preferably rounded-off supports (49) and at least part of the line-forming means (7) or the removal device (8) is pressed against the belt (5) which is free between the supports (49).

## Revendications

1. Dispositif de pulvérisation d'objets, notamment de peinture au pistolet avec un support pour les objets et avec un dispositif récepteur servant à récupérer le produit de pulvérisation passant devant les objets et devant le support, dans lequel le dispositif récepteur présente une bande (5) à rotation continue, indépendante du support, caractérisé en ce que des moyens (7) adjacents à la bande sont prévus pour faire converger le produit de pulvérisation, se trouvant sur la bande (5), au moins vers une trace (9) du produit de pulvérisation, plus étroite par rapport à la largeur de bande, et en ce qu'il est prévu, en outre, un dispositif d'enlèvement (8), adjacent à la bande (5), servant à enlever de la bande (5) la ou les traces (9), disposé derrière lesdits moyens (7) de formation de trace, dans le sens de déplacement (10) du convoyeur.

2. Dispositif selon la revendication 1, caractérisé en ce que les moyens (7) de formation de trace forment une seule trace (9) du produit de pulvérisation se trouvant, de préférence, au milieu de la bande.

3. Dispositif selon la revendication 1 ou 2, caractérisé en ce que les moyens (7) de formation de trace et/ou le dispositif d'enlèvement (8) comprennent au moins une lèvre (7) pouvant être placée en appui, de préférence élastiquement, contre la bande (5), et positionnée de façon oblique par rapport au sens de déplacement (10) de la bande (5).

4. Dispositif selon la revendication 3, caractérisé en ce que la lèvre (7) est fixée sur un bras-support (12) mobile monté en face de la bande (5).

5. Dispositif selon la revendication 3 ou 4, caractérisé en ce que la lèvre (7) est réalisée dans un matériau élastique en soi, de préférence dans du métal.

6. Dispositif selon l'une quelconque des revendications 3 à 5 , caractérisé en ce que le côté de la lèvre, tourné vers le produit de pulvérisation, forme un angle aigu (α) avec la surface de la bande.

7. Dispositif selon l'une quelconque des revendications 1 à 6, comprenant un convoyeur servant au transport des objets se trouvant de préférence sur ce convoyeur, caractérisé en ce que la bande (5) servant à récupérer le produit de pulvérisation est mobile transversalement par rapport au sens de déplacement du convoyeur (1).

8. Dispositif selon l'une quelconque des revendications 1 à 7, caractérisé en ce que le dispositif d'enlèvement présente au moins un tuyau (8) pouvant venir en appui, de préférence élastiquement, contre la bande (5).

9. Dispositif selon la revendication 8, caractérisé en ce que le tuyau est en appui contre la bande (5) dans la zone d'un rouleau de guidage (6) pour la bande (5).

10. Dispositif selon l'une quelconque des revendications 1 à 9, caractérisé en ce qu'un dispositif, servant à appliquer l'additif, de préférence un solvant pour peinture, est prévu sur la bande (5).

11. Dispositif selon la revendication 10, caractérisé en ce que le dispositif servant à appliquer l'additif comprend au moins une buse (45) de pulvérisation de l'additif.

12. Dispositif selon la revendication 10 ou 11, caractérisé en ce que le dispositif servant à appliquer l'additif comprend au moins un rouleau d'application (46) pour l'additif, adjacent à la bande (5).

13. Dispositif selon l'une quelconque des revendications 10 à 12, caractérisé en ce que le dispositif servant à appliquer l'additif comprend au moins un applicateur (47), en contact avec la bande (5), réalisé dans un matériau poreux et fibreux, notamment du feutre.

14. Dispositif selon l'une quelconque des revendications 10 à 13, caractérisé en ce que le dispositif servant à appliquer l'additif - vu dans le sens de déplacement de la bande (5) - est disposé avant cette zone sur laquelle le produit de pulvérisation, passant devant les objets (4) sur la bande (5), a un impact.

15. Dispositif selon l'une quelconque des revendications 1 à 14, caractérisé en ce que le support (18) présente des fils minces métalliques et non métalliques ou semblables qui sont tendus au-dessus de la bande (5), de sorte que ces fils métalliques et non métalliques ou semblables sont tendus entre des supports (21) qui sont fixés sur des véhicules mobiles (22).

16. Dispositif selon l'une quelconque des revendications 1 à 15, caractérisé en ce que la bande (5) présente une structure de surface (28) servant à récupérer le produit de pulvérisation.

17. Dispositif selon l'une quelconque des revendications 1 à 16, caractérisé en ce que la vitesse de déplacement de la bande (5) servant à récupérer le produit de pulvérisation est contrôlable, de préférence de façon progressive.

18. Dispositif selon l'une quelconque des revendications 1 à 16, caractérisé en ce que la vitesse de déplacement de la bande (5) servant à récupérer le produit de pulvérisation est plus élevée que la vitesse de transport du convoyeur (1).

19. Dispositif selon l'une quelconque des revendications 1 à 18, caractérisé en ce que le produit de pulvérisation enlevé de la bande est collecté et acheminé dans un réservoir de stockage (36) servant au produit de pulvérisation, où la viscosité du produit de pulvérisation enlevé est détectée et - pour produire une certaine viscosité du produit de pulvérisation - un solvant est ajouté au produit de pulvérisation en fonction de la viscosité détectée.

20. Dispositif selon l'une quelconque des revendications 1 à 19, caractérisé en ce que le dispositif d'enlèvement (7, 8) et/ou le réservoir de stockage (36) sont refroidis au moins partiellement.

21. Dispositif selon l'une quelconque des revendications 1 à 20, caractérisé en ce que la bande (5) est guidée, de préférence, sur deux supports (49) arrondis, et en ce qu'une partie au moins des moyens (7) de formation de trace ou du dispositif d'enlèvement (8) est appuyée contre la bande (5) libre entre les supports (49).
